(19) Europäisches Patentamt
European Patent Office
Office européen des brevets

(11) Veröffentlichungsnummer: **0 246 500**
**B1**

(12) # EUROPÄISCHE PATENTSCHRIFT

(45) Veröffentlichungstag der Patentschrift: **27.09.89**

(51) Int. Cl.[4]: **B05D 1/20**

(21) Anmeldenummer: **87106600.7**

(22) Anmeldetag: **07.05.87**

(54) **Schichtelemente, Verfahren zu ihrer Herstellung sowie ihre Verwendung.**

(30) Priorität: **10.05.86 DE 3615832**

(43) Veröffentlichungstag der Anmeldung: **25.11.87 Patentblatt 87/48**

(45) Bekanntmachung des Hinweises auf die Patenterteilung: **27.09.89 Patentblatt 89/39**

(84) Benannte Vertragsstaaten: **AT BE CH DE ES FR GB IT LI NL SE**

(56) Entgegenhaltungen:
**DE-A- 3 242 712**

**ANGEWANDTE CHEMIE, Band 98, Nr. 12, Dezember 1986, Seiten 1114-1115, VCH Verlaggesellschaft mbH, Weinheim, DE; E. ORTHMANN et al.: "Herstellung ultradünner Schichten mit molekular kontrolliertem Aufbau aus polymeren Phthalocyaninen mit der Langmuir-Blodgett-Technik"121-30 1983, 52(1), 115-19 000**
**JOURNAL OF THE AMERICAN CHEMICAL SOCIETY, Band 106, Nr. 17, 1984, Seiten 4706-4711, American Chemical Society; A.W. SNOW et al.: "Molecular association and monolayer formation of soluble phtalocyanine compounds"**

(73) Patentinhaber: **BASF Aktiengesellschaft, Carl-Bosch-Strasse 38, D-6700 Ludwigshafen(DE)**

(72) Erfinder: **Wegner, Gerhard, Prof. Dr., Carl-Zuckmayer-Strasse 1, D-6500 Mainz-Drais(DE)**
Erfinder: **Orthmann, Ernst, Brabanter StraBe 16, D-6200 Wiesbaden(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft Schichtelemente mit einem Schichtträger und mindestens einer darauf aufgebrachten dünnen Schicht mit Ausrichtung und gleichmäßiger Verteilung der Moleküle auf der Oberfläche des Schichtträgers unter Ausbildung einer Anordnung hoher Dichte, insbesondere einer Monomolekularschichtstruktur oder Multimolekularschichtstruktur, die eine vielfältige Anwendung gestatten. Die Erfindung betrifft ferner ein Verfahren zur Herstellung dieser Schichtelemente sowie deren Verwindung in der Optik, der antistatischen Ausrüstung, der Elektrochemie, der Elektrotechnik und der Reprduktionstechnik.

Die Herstellung dünner fester Schichten mit Monomolekularschichtstruktur oder Multimolekularschichtstruktur - häufig auch kurz Monoschichten (monolayer) oder Multischichten (multilayer) genannt - auf einem Schichtträger oder Substrat ist bekannt. Eine gängige Methode zu ihrer Herstellung ist die sogenannte Langmuir-Blodgett-Technik, bei der eine an der Phasengrenze zwischen Wasser und Luft ausgebildete monomolekulare Schicht hoher Dichte, in der die die Schicht bildenden Moleküle orientiert vorliegen, durch Ein- bzw. Austauchen eines Substrats in geordnetem Zustand auf dieses übertragen wird. Man erhält so auf dem als Schichtträger dienenden Substrat eine definierte dünne feste Schicht mit Monomolekularschichtstruktur (monolayer), in der die die Schicht bildenden Moleküle geordnet und in gleichmäßiger Verteilung auf der Substratoberfläche unter Ausbildung einer Anordnung hoher Dichte vorliegen. Durch mehrfache Wiederholung dieses Vorgangs können auf dem Substrat beliebig viele Schichten mit Monomolekularschichtstruktur übereinander aufgebracht werden, wodurch man auf der Substratoberfläche einen Film oder Überzug mit Multimolekularschichtstruktur (multilayer) erhält.

Zur Herstellung von dünnen festen Schichten mit Mono- oder Multimolekularschichtstruktur wurden bislang wasserunlösliche amphiphile Verbindungen mit hydrophiler Kopfgruppe und - meist langkettigem - hydrophobem Schwanz herangezogen. An der Phasengrenzfläche zwischen Wasser und Luft bilden diese amphiphilen Moleküle eine Monomolekularschicht, in der sich bei Oberflächenverkleinerung die Moleküle so orientieren, daß sie mit der hydrophilen Kopfgruppe im Wasser parallel zueinander und senkrecht auf der Wasseroberfläche stehen. Die Dicke der Monomolekularschichten läßt sich über die Länge der Seitenketten der amphiphilen Moleküle variieren. Andere Moleküle können in der Regel nicht verwendet werden, da diese auf der Wasseroberfläche zur Aggregation oder Kristallisation neigen, wobei die monomolekulare Eigenschaft der Oberflächenschicht verlorengeht.

Zu den amphiphilen Verbindungen, die für die Herstellung von Monomolekularschichten und Multimolekularschichten besonderes Interesse fanden, gehören amphiphile Diacetylene (vgl. u.a. J. Pol. Sci, Polymer Chem. Ed., Vol. 17, S. 1631-1644 (1979), EP-A-22 618 und EP-A-77 577). Sie gestatten die Herstellung von wohl definierten polymeren Multischichten und eignen sich vorteilhaft für die Herstellung von hochempfindlichen und hochauflösenden dünnen Photoresistschichten. In der DE-A-34 44 354 werden lichtempfindliche Aufzeichnungsmaterialien für die Elektrophotographie beschrieben, die zur Erzielung einer hohen Empfindlichkeit und Auflösung einen lichtempfindlichen Film mit Monomolekularoder Mulitmolekularschichtstruktur aus amphiphilen Verbindungen enthalten. Die filmbildenden amphiphilen Moleküle können beben einer hydrophilen Gruppe, beispielsweise einer Carboxylgruppe, und einer hydrophoben Gruppe, beispielsweise einer langkettigen Alkylgruppe, eine lichtempfindliche Gruppe, wie z.B. einen Porphyrin-, einen Anthracen-, einen Phenanthrenring, eine Diazo-, eine Polyvinyl- oder eine Polyacetylengruppe aufweisen. Gemäß den Beispielen der DE-A-34 44 354 werden zur Herstellung der lichtempfindlichen Filme mit Monomolekularschichtstructur bzw. Multimolekularschichtstruktur u.a. Polyvinylcarbazol-Derivate und Kupferphthalocyanin eingesetzt. Gerade in jüngster Zeit sind wegen der vielfältigen Anwendungsmöglichkeiten von Phthalocyanin-Verbindungen Monomolekularschichten von löslichen Metallophthalocyaninen Gegenstand verschiedener Untersuchungen gewesen (vgl. u.a. J. Am. Chem. Soc. 106, S. 4706-4711 (1984) und Nature, Vol. 313, S. 382-384 (1985)).

Die bekannten Langmuir-Blodgett-Filme, d.h. Monomolekular- bzw. Multimolekular-Filme, zeigen eine ausgeprägte Domänenstruktur, d.h. sie sind aus einer Vielzahl kleiner Domänen aufgebaut. Auch wenn in aller Regel die einzelnen Domänen eine orientierte und geordnete Molekülanordnung aufweisen, so sind in der gesamten Monomolekular- bzw. Multimolekular-Schicht die einzelnen Domänen zueinander völlig unregelmäßig und unorientiert angeordnet. So können auf einem Substrat mittels dieser bekannten LB-Filme wohl feste dünne geordnete Schichten wohldefinierter Dicke und hoher Gleichmäßigkeit hergestellt werden, diese festen dünnen Schichten besitzen jedoch makroskopisch wegen der Domänenbildung keine einheitliche und gleichförmige Struktur über die gesamte Schicht hinweg. So lassen sich viele erstrebenswerte Eigenschaften der festen dünnen Schichten, die mit einer gleichförmigen Molekülorientierung in der gesamten Schicht zusammenhängen, wie z.B. Anisotropie, bisher nicht oder nur schwierig und unzureichend in solchen festen dünnen Schichten einstellen.

Der Erfindung liegt die Aufgabe zugrunde, neue Schichtelemente aufzuzeigen, die auf einem Substrat als Schichtträger mindestens eine feste dünne, insbesondere monomolekulare oder multimolekulare, Schicht definierter einheitlicher und regelmäßiger Struktur und gleichförmiger Orientierung der die Schicht bildenden Moleküle über die gesamte feste, dünne Schicht hinweg aufweisen und aufgrund ihres Aufbaus vielfältige vorteilhafte und reproduzierbare Eigenschaften und damit ein breites Anwendungsspektrum besitzen.

Es wurde nun überraschend gefunden, daß man derartige Schichtelemente erhält, wenn man zur Herstellung der festen dünnen Schichten mit definierter Struktur metallomacrocyclische Polymere in geeigneter Weise auf ein Substrat mit hydrophober Oberfläche aufbringt.

Gegenstand der Erfindung ist dementsprechend ein Schichtelement mit einem Schichtträger mit hydrophober Oberfläche und mindestens einer hierauf aufgebrachten festen, dünnen, geordneten Schicht definierter einheitlicher und regelmäßiger Struktur mit gleichförmiger Orientierung der die Schicht bildenden Moleküle in einer Richtung von einem in einem organischen, mit Wasser nicht mischbaren Lösungsmittel löslichen und/oder schmelzbaren metallomacrocyclischen Polymeren der allgemeinen Formel $[M(Pcyc)O]_n$, worin bedeuten

M: Si, Ge oder Sn

Pcyc: ein komplexbildendes zentrosymmetrisches polycyclisches Ringsystem, wie insbesondere ein hydrophob substituiertes Phthalocyaninringsystem, und

n: mittlerer Polymerisationsgrad gleich oder größer 3.

Gegenstand der Erfindung ist weiterhin ein Verfahren zur Herstellung von Schichtelementen der vorstehend genannten Art durch Aufbringen mindestens einer festen, dünnen Schicht definierter Struktur auf ein Substrat als Schichtträger, welches dadurch gekennzeichnet ist, daß man eine auf einer Wasseroberfläche erzeugte monomolekulare festanaloge Schicht von einem in einem organischen, mit Wasser nicht mischbaren Lösungsmittel löslichen metallomacrocyclischen Polymeren der allgemeinen Formel $[M(Pcyc)O]_n$, worin M = Si, Ge oder Sn, Pcyc = ein komplexbildendes zentrosymmetrisches polycyclisches Ringsystem und n = den mittleren Polymerisationsgrad von gleich oder größer 3 bedeuten, von der Wasseroberfläche durch Ein- bzw. Austauchen eines Substrats mit hydrophober Oberfläche hierauf überträgt sowie gegebenenfalls diesen Vorgang mehrfach wiederholt.

Gegenstand der Erfindung ist weiterhin die Verwindung der genannten neuen Schichtelemente in der Optik, der Elektrotechnik, der antistatischen Ausrüstung von Gegenständen und der Reproduktionstechnik.

Gegenstand der Erfindung sind darüber hinaus die diversen Ausführungsformen der Schichtelemente, des Verfahrens zu ihrer Herstellung sowie ihrer Verwendung, wie sie sich aus der nachfolgenden detaillierten Beschreibung ergeben.

Es hat sich überraschend gezeigt, daß man mit den erfindungsgemäß einzusetzenden löslichen und/oder schmelzbaren metallomakrocyclischen Polymeren auf einer hydrophoben Substratoberfläche wohldefinierte feste dünne Schichten mit Monomolekularschichtstruktur oder Multimolekularschichtstruktur erzeugen kann, die keine Domänenbildung zeigen, sondern über die gesamte Schichtfläche als auch -dicke hinweg eine einheitliche und regelmäßige geordnete Struktur mit gleichförmiger Orientierung der die festen dünnen Schichten bildenden metallomakrocyclischen Polymermoleküle in einer Richtung besitzen. Die festen dünnen Schichten der erfindungsgemäßen Schichtelemente von den metallomakrocyclischen Polymeren lassen sich daher auch als "single domain"-Filme oder "single domain"-Schichten bezeichnen und charakterisieren, die in einer Art "eingefrorenen Flüssigkristallstruktur" vorliegen und in denen die komplexbildenden zentrosymmetrischen polycyclischen Ringsysteme der metallomakrocyclischen Polymeren quer zur Ebene des Schichtträgers bzw. Substrats stehen. Die erfindungsgemäßen Schichtelemente sind, unabhängig von der Zahl der auf einem Schichtträger übereinander angeordneten dünnen Schichten mit Monomolekular- oder Multimolekularschichtstruktur, optisch anisotrop, darüber hinaus thermisch sehr stabil und besitzen vorteilhaft ausgeprägte elektrische und optoelektrische Eigenschaften, wodurch sie für eine Vielzahl verschiedenartigster Anwendungen hervorragend geeignet sind. Daß sich mit den erfindungsgemäß einzusetzenden löslichen und/oder schmelzbaren metallomakrocyclischen Polymeren Monomolekular- bzw. Multimolekularschichten wohldefinierter einheitlicher und regelmäßiger Struktur herstellen lassen, war umso überraschender, als es sich bei den löslichen und/oder schmelzbaren metallomakrocyclischen Polymeren, die erfindungsgemäß die festen dünnen Schichten mit monomolekularer oder multimolekularer Schichtstruktur bilden, nicht um amphiphile Verbindungen handelt, wie sie üblicherweise in der Langmuir-Blodgett-Technik (LB-Technik) zur Herstellung von Monomolekularfilmen oder Multimolekularfilmen Verwendung finden.

Als Schichtträger für die erfindungsgemäßen Schichtelemente, auf die die festen, dünnen, geordneten Schichten wohldefinierter Struktur von den metallomakrocyclischen Polymeren aufgebracht sind, kommen beliebige feste, vorzugsweise dimensionsstabile, Substrate aus den unterschiedlichsten Materialien in Betracht. Die als Schichtträger dienenden Substrate können z.B. transparent oder lichtundurchlässig, elektrisch leitend oder isolierend sein. Wesentlich ist allein, daß die Oberfläche des Substrats, auf die die feste dünne Schicht von den metallomakrocyclischen Polymeren aufgebracht wird, hydrophob ist. Dies kann dadurch sichergestellt sein, daß das Substrat aus einem hydrophoben Material besteht, oder aber dadurch erreicht werden, daß die Oberfläche des Substrats vor dem Aufbringen der festen dünnen Schicht von den metallomakrocyclischen Polymeren in an sich bekannter Weise durch eine geeignete Vorbehandlung hydrophobisiert worden ist. Die zu beschichtende hydrophobe Oberfläche der Substrate sollte möglichst rein sein, damit die Ausbildung einer festen, dünnen, geordneten Schicht, insbesondere monomolekularer bzw. multimolekularer Schichtstruktur, nicht gestört wird. Beispielsweise kann bei Anwesenheit von oberflächenaktiven Stoffen auf der zu beschichtenden Oberfläche der Substrate die Ausbildung eines guten Monomolekular- bzw. Multimolekular-Films beeinträchtigt werden. Es

ist jedoch möglich, daß die als Schichtträger dienenden Substrate auf ihrer zu beschichtenden Oberfläche vor dem Aufbringen der festen dünnen Schichten von den metallomakrocyclischen Polymeren zunächst mit einer Zwischenschicht versehen werden, beispielsweise zur Erzielung einer hohen Haftung zwischen der festen, dünnen Schicht von den metallomakrocyclischen Polymeren und dem Substrat, oder daß das Substrat in mehreren Lagen aus verschiedenen Materialien gebildet wird, solange die äußere Oberfläche, auf die die feste dünne Schicht wohldefinierter Struktur von den metallomakrocyclischen Polymeren aufgebracht werden soll, hydrophob ist.

Als Materialien für die als Schichtträger dienenden Substrate können beispielsweise Metalle, wie etwa Platin, Nickel, Palladium, Aluminium, Chrom, Niob, Tantal, Titan, Stahl und dergleichen verwendet werden. Andere geeignete Materialien für die Substrate sind u.a. Kunststoffe, wie z.B. Polyester, etwa Polyethylenterephthalat oder Polybutylenterephthalat, Polyvinylchlorid, Polyvinylidenchlorid, Polytetrafluorethylen etc. Gleichermaßen kommen beispielsweise Silizium, Glas, Siliziumdioxid, keramische Werkstoffe oder Celluloseprodukte, wie beispielsweise Papiere, als Materialien für die Substrate in Betracht. Die Oberfläche von Glassubstraten kann - sofern erforderlich - in an sich bekannter Weise, beispielsweise durch Umsetzung mit Alkylsilanen, hydrophobisiert werden. Die Auswahl der Substratmaterialien richtet sich u.a. vornehmlich nach dem Verwendungszweck der erfindungsgemäßen Schichtelemente. Für optische Elemente werden in aller Regel transparente, lichtdurchlässige Substrate als Schichtträger eingesetzt. Werden die erfindungsgemäßen Schichtelemente beispielsweise in der Elektrotechnik oder bei elektrochemischen Prozessen verwendet, dienen als Substrate insbesondere elektrisch leitfähige Materialien, wie Metalle, oder Materialien mit elektrisch leitfähigen, insbesondere metallischen, Oberflächenschichten, wie beispiels weise metallisierte Kunststoffolien. Für die antistatische Ausrüstung werden die festen dünnen Schichten von den metallomakrocyclischen Polymeren auf die antistatisch auszurüstenden Gegenstände, beispielsweise Kunststoffteile, als Substrate aufgebracht.

Die als Schichtträger für die erfindungsgemäßen Schichtelemente dienenden Substrate können in Abhängigkeit vom Verwendungszweck beliebige Formen aufweisen. Beispielsweise können sie film-, folien-, platten-, band-, scheibenförmig oder auch zylinderförmig sein oder unter beliebigen anderen Formen ausgewählt werden. Im allgemeinen wird es sich bei den Schichtträgern um flache, ebene Substrate handeln, wie z.B. Filme, Folien, Platten, Scheiben, Bänder, Bleche und dergleichen. Die zu beschichtende Oberfläche der Substrate ist vorzugsweise glatt, wie es für die Herstellung von dünnen geordneten Schichten mit wohldefinierter Struktur, insbesondere Monomolekularfilmen oder Multimolekularfilmen, üblich ist. Bei den flachen ebenen Substraten, wie Filmen, Folien, Bändern etc., können die erfindungsgemäßen festen, dünnen, geordneten Schichten wohldefinierter Struktur von den metallomakrocyclischen Polymeren nur auf eine oder beide Oberflächen des Substrats aufgebracht werden. Selbstverständlich muß in dem Fall, in dem das metallomakrocyclische Polymer nur auf einer der Oberflächen des Substrats aufgebracht wird, auch nur diese Oberfläche des Substrats hydrophob sein.

Die erfindungsgemäßen Schichtelemente enthalten auf dem als Schichtträger dienenden Substrat mindestens eine feste, dünne, geordnete Schicht wohldefinierter Struktur, insbesondere mit einer Monomolekularschichtstruktur oder Multimolekularschichtstruktur, von einem metallomakrocyclischen Polymeren der allgemeinen Formel $[M(Pcyc)O]_n$ aufgebracht, worin M = Si, Ge oder Sn, (Pcyc) = ein komplexbildendes zentrosymmetrisches polycyclisches Ringsystem und n = den mittleren Polymerisationsgrad von gleich oder größer 3 bedeuten. Bei diesen erfindungsgemäß zur Anwendung kommenden metallomakrocyclischen Polymeren handelt es sich um Polysiloxane, Polygermyloxane oder Polystannyloxane, d.h. um Polymere, bei denen die kovalent über Sauerstoffatome miteinander verknüpften Metallatome die Polymerkette bilden, wobei die Metallatome (Si, Ge, Sn) der Polymerkette jeweils von einem komplexbildenden, zentrosymmetrischen, polycyclischen Ringsystem umgeben sind, dessen Zentralatom sie bilden. Als polycyclische Ringsysteme kommen dabei insbesondere solche in Betracht, die planare zentrosymmetrische Metallkomplexe bzw. -chelate zu bilden vermögen, vor allem die planare zentrosymmetrische $N_4$-Chelate bildenden Polycyclen. Als Beispiele für solche komplexbildenden, zentrosymmetrischen Ringsysteme seien die Porphyrin-, Corrin-, Hemiporphyrazin- und insbesondere Phthalocyanin-Ringsysteme genannt.

Die erfindungsgemäß zur Ausbildung der festen dünnen geordneten Schichten definierter Struktur zur Anwendung kommenden metallomakrocyclischen Polymere sollen schmelzbar und/oder in organischen, mit Wasser nicht mischbaren Lösungsmitteln löslich sein. Vorzugsweise sind die erfindungsgemäß zur Anwendung kommenden metallomakrocyclischen Polymeren in solchen organischen, mit Wasser nicht mischbaren Lösungsmitteln löslich, die leicht verdampfbar sind, wie z.B. Chloroform u.ä.. Zur Erzielung der gewünschten Lösbarkeit und/oder Schmelzbarkeit der metallomakrocyclischen Polymere ist es im allgemeinen erforderlich, daß die polycyclischen Ringsysteme der metallomakrocyclischen Polymeren äußere Substituenten tragen, da metallomakrocyclische Polymere der in Rede stehenden Art, deren polycyclisches Ringsystem unsubstituiert ist, wie z.B. die bekannten unsubstituierten Phthalocyaninatopolysiloxane, in aller Regel unlöslich und unschmelzbar sind. Unter "außere" Substituenten werden dabei solche Substituenten verstanden, die an der Peripherie des polycyclischen Ringsystems angeordnet sind; sie können daher auch als periphere Substituenten bezeichnet werden. Als äußere Substituenten der polycyclischen Ringsysteme kommen an sich beliebige organische, hydrophob wirkende Reste, d.h. Reste ohne hydrophile Endgruppen, in Betracht, sofern sie die Lösbarkeit und/oder Schmelzbarkeit der

metallomakrocyclischen Polymeren erhöhen oder bewirken. So kann es sich bei den äußeren Substituenten der polycyclischen Ringsysteme beispielsweise um aliphatische Reste, etwa langkettige Alkyl- oder langkettige Alkoxygruppen, um aromatische Reste, etwa Arylgruppen, oder um gemischt aliphatisch-aromatische Reste handeln, wobei die äußeren Substituenten auch Heteroatome, beispielsweise Etherbindungen, oder Heteroatome enthaltende Gruppen, wie beispielsweise Carbonylgruppen oder Sulfonamidgruppen, enthalten können, solange hierdurch die hydrophobe Wirkung dieser äußeren Substituenten nicht beeinträchtigt wird. Die organischen Reste für die äußeren Substituenten können gleichermaßen linear oder verzweigt sein, auch kann es sich hierbei beispielsweise um chirale Reste oder Gruppen handeln. Die erfindungsgemäß einzusetzenden metallomakrocyclischen Polymeren sind hydrophob und in Wasser unlöslich.

Die erfindungsgemäß für die Herstellung der festen dünnen geordneten Schichten mit definierter Struktur einzusetzenden metallomakrocyclischen Polymeren seien nachfolgend stellvertretend anhand der schmelzbaren und/oder in einem organischen, mit Wasser nicht mischbaren Lösungsmittel löslichen Phthalocyaninatopolymetalloxane näher illustriert, die aufgrund der vielseitigen und hervorragenden Eigenschaften der mit ihnen hergestellten erfindungsgemäßen Schichtelemente besonders vorteilhaft sind. Diese Phthalocyaninatopolymetalloxane können durch die allgemeine Formel $[M(Pc)O]_n$ dargestellt werden, worin stehen M für Si, Ge oder Sn, (Pc) für ein derartig hydrophob substituiertes Phthalocyanin-Ringsystem, daß die Phthalocyaninatopolymetalloxane schmelzbar und/oder in organischen, mit Wasser nicht mischbaren Lösungsmitteln löslich sind, und n für den mittleren Polymerisationsgrad von gleich oder größer 3. Die Phenylringe des Phthalocyaninringsystems können jeder einen oder mehrere, insbesondere 1 oder 2, Substituenten tragen, welche nichtpolare, hydrophobe Endgruppen aufweisen sollen. Die einzelnen Phenylringe des Phthalocyaninringsystems sind im allgemeinen gleich substituiert. Als Substituenten kommen die vorstehend angesprochenen organischen Reste in Betracht, die gegebenenfalls Heteroatome oder Heteroatome enthaltende Gruppen enthalten können. Vorzugsweise trägt jeder Phenylring des Phthalocyaninringsystems mindestens einen Substituenten mit einem endständigen, langkettigen Alkylrest, insbesondere mit 6 bis 30 C-Atomen. In den Erfindungsgemäß zu verwendenden Phthalocyaninatopolymetalloxanen sind die Metallatome aus der Gruppe Si, Ge und Sn als Zentralatom in dem hydrophob substituierten Phthalocyaninringsystem komplex gebunden, wobei die Si-, Ge- oder Sn-Atome untereinander kovalent über jeweils ein Sauerstoffatom unter Ausbildung einer Polysiloxan-, Polygermyloxan- bzw. Polystannyloxan-Kette miteinander verknüpft sind.

Für die Herstellung der festen, dünnen geordneten Schichten wohldefinierter Struktur der erfindungsgemäßen Schichtelemente bevorzugte Phthalocyaninatopolymetalloxane sind aus wiederkehrenden Einheiten der nachstehenden allgemeinen Formel (I) aufgebaut

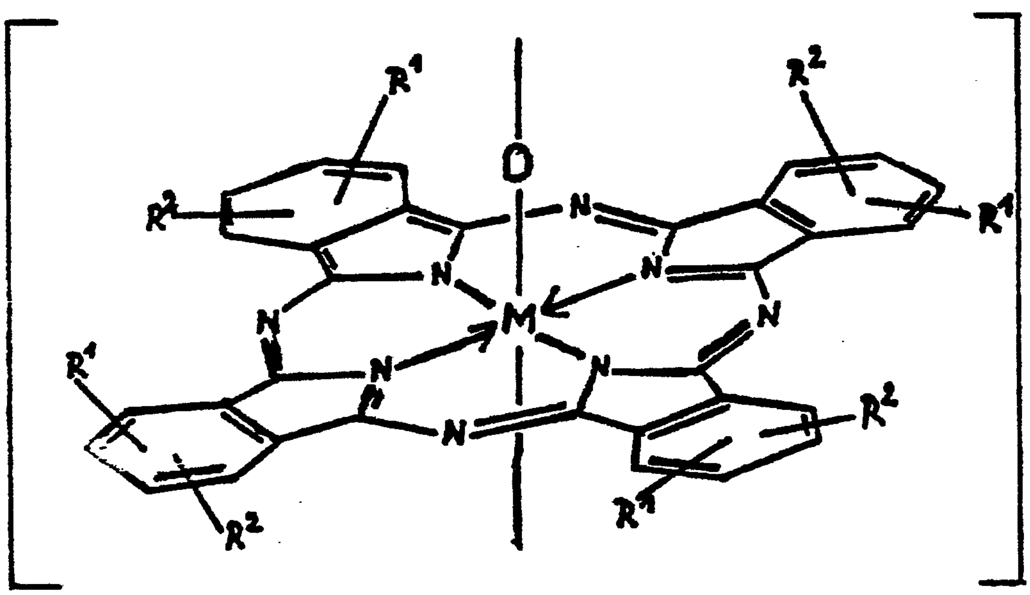

(I).

In der allgemeinen Formel (I) stehen M für ein Silizium-, Germanium- oder Zinn-Atom und die Reste $R^1$ und $R^2$ für einen Substituenten der weiter oben erläuterten Art, wie z.B einen Alkylrest, einen Alkoxyrest, einen Alkoxyalkylrest, einen Arylrest, einen Alkaryl- oder Aralkylrest, einen Sulfonamidoalkylrest oder $R^1$ und $R^2$ zusammen auch den Rest eines ankondensier ten aromatischen Ringsystems, wobei einer der Reste $R^1$ oder $R^2$ auch ein Wasserstoffatom darstellen kann. Als typische Beispiele für den Rest $R^1$ in der allgemeinen Formel (I) seien ein Wasserstoffatom, eine Alkylgruppe, beispielsweise Methyl, oder eine Alkoxygruppe, wie beispielsweise die $-OCH_3$-Gruppe, genannt. Als typische Beispiele für den Rest $R^2$ in der allgemeinen Formel (I) seien langkettige Alkylgruppen, insbesondere mit 6 bis 30 C-Atomen,

langkettige Alkoxygruppen, insbesondere mit 6 bis 30 C-Atomen, beispielsweise die $-OC_8H_{17}$- oder die $-OC_{12}H_{25}$-Gruppe, Alkoxyalkylenreste mit einer endständigen langkettigen Alkylgruppe mit vorzugsweise 6 bis 30 C-Atomen, beispielsweise die $-CH_2-O-C_8H_{17}$-Gruppe, sowie die $-SO_2NHR$-Gruppe mit R = einem langkettigen Alkylrest, insbesondere mit 6 bis 30 C-Atomen, genannt.

Der mittlere Polymerisationsgrad der erfindungsgemäß zur Anwendung gelangenden metallomakrocyclischen Polymeren, wiedergegeben durch die Zahl n in der vorstehend angeführten allgemeinen Formel $[M(Pcyc)O]_n$ der metallomakrocyclischen Polymere bzw. allgemeinen Formel $[M)Pc)O]_n$ für die vorteilhaften Phthalocyaninatopolymetalloxane, soll mindestens 3 betragen, ist im übrigen nicht begrenzt und kann in weiten Grenzen variieren. Beispielsweise sind Polymerisationsgrad bis n = 100 durchaus möglich. Die Obergrenze des Polymerisationsgrades wird vielfach durch die Art der Herstellung der Polymeren und/oder die Art der Substituenten des komplexbildenden, zentrosymmetrischen polycyclischen Ringsytems mitbestimmt. In der Praxis hat sich gezeigt, daß die vorteilhaften und bevorzugten metallomakrocyclischen Polymeren häufig einen mittleren Polymerisationsgrad im Bereich von etwa 4 bis 20 aufweisen.

Die löslichen und/oder schmelzbaren metallomakrokcyclischen Polymeren der in Rede stehenden Art können in an sich bekannter und dem Fachmann geläufiger Weise durch Polykondensation der entsprechenden monomeren Dihydroxy-Verbindungen $[M(Pcyc)(OH)_2]$ hergestellt werden, wobei M und (Pcyc) die vorstehend im Zusammenhang mit den Polymeren genannten Bedeutungen zukommen. Die Synthese von metallomakrocyclischen Polymeren, deren polycylisches Ringsystem allerdings unsubstituiert ist und die Polymeren dadurch unlöslich und unschmelzbar sind, ist beispielsweise beschrieben in Organic Chemistry, Vol. 2, S. 1064-1065 (1963), J.Am.Chem.Soc. Vol. 91, S. 5210-5214 (1969), Adv. Pol. Sci. Vol. 50 (1983), S. 83 ff. und J.Am.Chem.Soc. Vol. 105 (1983), S. 1539-1550. Die Herstellung der entsprechenden löslichen und/oder schmelzbaren metallomakrocyclischen Polymeren kann in analoger Weise erfolgen, wobei man zur Einführung der die Lösbarkeit und/oder Schmelzbarkeit bewirkenden Substituenten entweder bereits von entsprechenden substituierten Ausgangsverbindungen ausgeht oder zunächst die unsubstituierten Polymeren herstellt und anschließend die Substituenten durch polymeranaloge Umsetzung in die polycyclischen Ringsysteme der Polymeren einführt. Bedingt durch die Herstellung der Polymeren durch Polykondensation der entsprechenden monomeren Dihydroxyverbindungen enthalten die erfindungsgemäß zu verwendenden metallomakrocyclischen Polymeren im allgemeinen Hydroxylendgruppen. Selbstverständlich ist es aber auch möglich, metallomakrocyclische Polymere der in Rede stehenden Art mit anderen Endgruppen einzusetzen, wie sie beispielsweise erhalten werden, wenn man die Hydroxylendgruppen durch Reaktion mit anderen Verbindungen verschließt.

Die festen, dünnen, geordneten Schichten definierter einheitlicher und regelmäßiger Struktur der erfindungsgemäßen Schichtelemente können von einem oder mehreren der metallomakrocyclischen Polymeren gebildet wirden. Die festen, dünnen, geordneten Schichten können darüber hinaus neben den sie bildenden metallomakrocyclischen Polymeren auch noch weitere Bestandteile enthalten, wobei hier insbesondere die den Polymeren zugrundeliegenden monomeren metallomakrocyclischen Verbindungen zu nennen sind. So hat sich gezeigt, daß erfindungsgemäße Schichtelemente, deren feste, dünne, geordnete Schichten aus einer Mischung der schmelzbaren und/oder löslichen metallomakrocyclischen Polymeren der allgemeinen Formel $[M(Pcyc)O]_n$ und der diesen Polymeren zugrundeliegenden schmelzbaren und/oder löslichen monomeren metallomakrocyclischen Verbindungen der allgemeinen Formel $[M(Pcyc)X_2]$ gebildet werden, wobei M, (Pcyc) und n die weiter oben angegebenen Bedeutungen besitzen und X für eine an M gebundene Endgruppe, insbesondere eine Hydroxylgruppe, steht, gleichermaßen vorteilhafte und insbesondere auch optisch anisotrope Eigenschaften bestizen. Dies war völlig unerwartet, da nämlich feste, dünne, geordnete Schichten, die nur aus den den metallomakrocyclischen Polymeren zugrundeliegenden Monomeren gebildet werden, eine ausgeprägte Domänenstruktur aufweisen und optisch isotrop sind.

Der Anteil der den metallomakrocyclischen Polymeren zugrundeliegenden Monomeren, welche ebenfalls schmelzbar und/oder in einem organischen, mit Wasser nicht mischbaren und vorzugsweise leicht verdampfbaren Lösungsmittel löslich sein sollen, in den Polymer/Monomer-Mischungen für die festen, dünnen, geordneten Schichten der erfindungsgemäßen Schichtelemente kann dabei in weiten Grenzen schwanken und wird im allgemeinen im Bereich von etwa 1 bis 80 Gew.%, bezogen auf die Polymer/Monomer-Mischung, liegen. Erfindungsgemäße Schichtelemente mit festen, dünnen, geordneten Schichten aus Mischungen der in Rede stehenden metallomakrocyclischen Polymeren und einem hohen Anteil an den diesen Polymeren zugrundeliegenden Monomeren zeigen überraschenderweise immer noch eine deutliche, stark ausgeprägte optische Anisotropie. Sehr vorteilhaft sind dabei solche erfindungsge mäßen Schichtelemente, deren feste, dünne, geordnete Schichten aus einer Mischung von schmelzbaren und/oder in organischen, mit Wasser nicht mischbaren Lösungsmitteln löslichen Phthalocyaninatopolymetalloxanen der allgemeinen Formel $[M(Pc)O]_n$ und den diesen Polymeren zugrundeliegenden monomeren Verbindungen der allgemeinen Formel $[M(Pc)X_2]$ beestehen, wobei in diesen allgemeinen Formeln, wie weiter oben bereits angegeben, M = Si, Ge oder Sn, (Pc) = ein Phthalocyaninringsystem, das zur Erzielung der Schmelzbarkeit und/oder lösbarkeit der Verbindungen hydrophob substituiert ist, n = den mittleren Polymerisationsgrad von gleich oder größer 3 und X = eine beliebige Endgruppe, insbesondere eine Hydroxylgruppe, bedeuten. Vorzugsweise sind in den festen, dünnen,

geordneten Schichten der erfindungsgemäßen Schichtelemente, die aus einer Polymer/Monomer-Mischung der genannten Art gebildet werden, die Monomeren in einer Menge von etwa 5 bis 50 Gew.%, bezogen auf die Polymer/Monomer-Mischung, enthalten. Über die Menge an Monomeren in den festen, dünnen, geordneten Schichten von den in Rede stehenden metallomakrocyclischen Polymeren lassen sich die Eigenschaften dieser festen, dünnen, geordneten Schichten und damit der erfindungsgemäßen Schichtelemente, wie z.B. optische Anisotropie, Absorptionskurven und -maxima etc., variieren und einstellen.

Die von den metallomakrocyclischen Polymeren gebildeten festen, dünnen, geordneten Schichten der erfindungsgemäßen Schichtelemente zeigen keine Domänenbildung wie die bekannten Monoschichten oder Multischichten, sondern weisen über die gesamte dünne, geordnete Schicht bzw. die dünnen, geordneten Schichten hinweg eine wohldefinierte, einheitliche und regelmäßige Struktur auf. Sie bilden somit auf der Substratoberfläche einen "single-domain"-Film. In den festen, dünnen, geordneten Schichten der erfindungsgemäßen Schichtelemente sind dabei die die dünnen, geordneten Schichten bildenden Moleküle der metallomakrocyclischen Polymeren über die gesamte Schicht hinweg gleichförmig in einer Richtung orientiert und dabei so angeordnet, daß die Ringebenen der polycyclischen Ringsysteme der metallomakrocyclischen Polymeren quer, d.h. senkrecht oder zumindest im wesentlichen senkrecht, zur Ebene der als Schichtträger dienenden Substratoberfläche stehen. Dementsprechend liegen die Polysiloxan-, Polygermyloxan- bzw. Polystannyloxan-Ketten der metallomakrocyclischen Polymeren in den festen, dünnen, geordneten Schichten der erfindungsgemäßen Schichtelemente über die gesamte feste, dünne, geordnete Schicht hinweg parallel bzw. zumindest im wesentlichen parallel zueinander und in einer Ebene oder in Ebenen parallel oder zumindest im wesentlichen parallel zur Ebene der als Schichtträger dienenden Substratoberfläche. Bei den festen, dünnen, geordneten Schichten der erfindungsgemäßen Schichtelemente, die aus Mischungen der metallomakrocyclischen Polymeren mit den diesen Polymeren zugrundeliegenden metallomakrocyclischen Mono meren gebildet werden, steht die Ringebene des polycyclischen Ringsystems der metallomakrocyclischen Monomeren parallel zu den Ringebenen der polycyclischen Ringsysteme der metallomakrocyclischen Polymeren und damit ebenfalls senkrecht oder zumindet im wesentlichen senkrecht zu der Ebene der Substratoberfläche. Es ist daher anzunehmen, daß die Monomeren durch die Polymerstapel geordnet werden und sich dabei ebenso wie die Polymeren auf der Substratoberfläche orientieren. Die einheitliche und regelmäßige Schichtstruktur mit der gleichförmigen Molekülorientierung in einer Richtung der festen, dünnen, geordneten Schichten von den metallomakrocyclischen Polymeren in den erfindungsgemäßen Schichtelementen läßt sich durch die für solche Schichten üblichen und bekannten Analysenmethoden, insbesondere Röntgenbeugungs- und Elektronenbeugungs-Messungen, nachweisen und wird durch die charakteristischen Eigenschaften der erfindungsgemäßen Schichtelemente, insbesondere durch deren einheitliche optische Absorption, Doppelbrechung und Dichroismus, belegt.

Die festen, dünnen, geordneten Schichten der erfindungsgemäßen Schichtelemente von den metallomakrocyclischen Polymeren besitzen insbesondere und vorteilhafterweise eine Monomolekularschichtstruktur oder Multimolekularschichtstruktur. Bei den Schichten mit Monomolekularschichtstruktur handelt es sich um Monomolekularschichten bzw. Monomolekularfilme, d.h. geordnete Schichten oder Filme aus einer Moleküllage mit Ausrichtung und gleichmäßiger Verteilung der die Schicht bzw. den Film bildenden Moleküle auf der Substratoberfläche unter Ausbildung einer Anordnung hoher Dichte, wie sie beispielsweise nach dem Langmuir-Blodgett-Verfahren (nachstehend als "LB-Verfahren" bezeichnet) erhalten werden. Die festen, dünnen geordneten Schichten der erfindungsgemäßen Schichtelemente mit Monomolekularschichtstruktur können dabei aus einer oder mehreren verschiedenen Arten der in Rede stehenden metallomakrocyclischen Polymeren bzw. Mischungen hiervon mit den entsprechenden Monomeren gebildet werden. Bei den festen, dünnen, geordneten Schichten mit Mulitmolekularschichtstruktur handelt es sich um aus Monomolekularschichten bzw. -filmen bestehende mehrlagige Schichten, d.h. um geordnete Schichten, bei denen zwei oder mehr Monomolekularfilme übereinander auf dem Schichtträger angeordnet sind. Bei den festen, dünnen, geordneten Schichten mit Multimolekularschichtstruktur können die einzelnen Monomolekularfilm-Lagen aus den gleichen oder auch verschiedenen metallomakrocyclischen Polymeren bzw. gleichen oder auch verschiedenartigen Mischungen aus metallomakrocyclischen Polymeren und Monomeren der in Rede stehenden Art aufgebaut sein. Darüber hinaus ist es bei den dünnen Schichten mit Multimolekularschichtstruktur selbstverständlich auch möglich, daß die einzelnen Monomolekularfilm-Lagen aus nur einer Art von Molekülen oder mehreren verschiedenen Arten von Molekülen (metallomakrocyclischen Polymeren gegebenenfalls in Mischung mit den ihnen zugrundeliegenden Monomeren) gebildet werden.

Die festen, dünnen, geordneten Schichten der erfindungsgemäßen Schichtelemente sind sehr homogen, erstaunlich temperaturstabil, optisch anisotrop und im Sinne der Elektrochemie elektroaktiv. Die Dicke dieser Schichten kann – je nach Anwendungszweck und gewünschtem Eigenschaftsbild – in weiten Grenzen variiert werden. Bei den dünnen, geordneten Schichten mit Monomolekularschichtstruktur wird die Dicke der Schicht durch die Moleküldimensionen bestimmt und kann durch die Wahl der die Schicht bildenden Verbindungen variiert werden. Bei den dünnen, geordneten Schichten mit Multimolekularschichtstruktur hängt die Dicke der Schichten im wesentlichen von der Anzahl der übereinander angeordneten Monomolekularfilm-Lagen ab, wobei die Anzahl dieser Lagen beliebig gewählt werden kann und grundsätzlich nicht begrenzt ist. Beispielsweise wurden erfindungsgemäße Schichtelemente

hergestellt, deren feste, dünne, geordnete Schichten mit Mulitmolekularschichtstruktur aus 120 und mehr Monomolekularfilm-Lagen aufgebaut waren. Die erfindungsgemäßen Schichtelemente können auch Deck- und Schutzschichten und/oder Zwischenschichten zwischen Schichtträger und den dünnen Schichten und/oder den einzelnen Lagen von mehrlagig aufgebauten dünnen Schichten enthalten.

Die erfindungsgemäßen Schichtelemente sind bis zu Temperaturen über 250°C stabil. Erst danach zeigen die festen, dünnen, geordneten Schichten von den metallomakrocyclischen Polymeren beginnende Zersetzung unter Verlust der besonderen und vorteilhaften Schichteigenschaften. Es hat sich überraschenderweise gezeigt, daß die Eigenschaften der erfindungsgemäßen Schichtelemente nicht nur stabilisiert, sondern sogar noch verbessert werden können, wenn die erfindungsgemäßen Schichtelemente unmittelbar nach ihrer Herstellung einer Temperung bei erhöhten Temperaturen, etwa im Bereich von 50 bis 200°C, vorzugsweise im Bereich von 100 bis 150°C, unterworfen werden. Durch eine solche Temperung kann beispielsweise die optische Anisotropie der erfindungsgemäßen Schichtelemente um den Faktor 2 und mehr erhöht werden.

Die erfindungsgemäßen Schichtelemente mit den festen, dünnen, geordneten Schichten von den metallomakrocyclischen Polymeren können nach an sich bekannten Methoden hergestellt werden. Besonders vorteilhaft ist hierfür das LB-Verfahren. Hierzu wird mit einem mit Wasser gefüllten Langmuirtrog gearbeitet, d.h. einem z.B. viereckigen, flachen Trog mit einer beweglichen Barriere auf der einen und einem Druckaufnehmer auf der anderen Seite. Auf die Wasseroberfläche wird eine bestimmte Menge einer Lösung der metallomakrocyclischen Polymeren bzw. eine Lösung der metallomakrocyclischen Polymer/Monomer-Mischung aufgebracht und unter Verdunsten des Lösungsmittels eine Monomolekularschicht der metallomakrocyclischen Polymeren bzw. der metallomakrocyclischen Polymer/Monomer-Mischung auf dem Wasser gebildet. Danach wird mittels der Barriere die Wasseroberfläche kontinuierlich verkleinert, wodurch ein lateraler Druck auf die monomolekulare Schicht auf der Wasseroberfläche ausgeübt wird und man einen monomolekularen festanologen Film erhält. Dieser festanaloge Monomolekurlarfilm von den metallomakrocyclischen Polymeren, gegebenenfalls in Mischung mit den ihnen zugrundeliegenden Monomeren, in dem die Moleküle in Art einer zweidimensionalen Mesophase angeordnet und orientiert sind, wird nun von der Wasseroberfläche durch Ein- bzw. Austauchen eines Substrats auf dieses übertragen. Hierbei wird üblicherweise in einem Temperaturbereich von etwa 0 bis 50° gearbeitet. Durch mehrfache Wiederholung des Ein- bzw. Austauchens kann dabei ein Multimolekularfilm auf dem Substrat gebildet werden. Zur Herstellung der erfindungsgemäßen Schichtelemente wird das als Schichtträger dienende Substrat vorzugsweise senkrecht zur Wasseroberfläche ein- bzw. ausgetaucht, um den auf der Wasseroberfläche erzeugten Monomolekularfilm auf das Substrat zu übertragen. Bei zylinderförmigen Substraten als Schichtträger kann für die Übertragung des Monomolekularfilms von der Wasseroberfläche auf das Substrat das Drehzylinderverfahren angewandt werden, bei dem das zylinderförmig Substrat auf der Wasseroberfläche umlaufen gelassen wird.

Wie bereits erwähnt, kann es vorteilhaft sein, unmittelbar nach der Übertragung der Monomolekularfilme von der Wasseroberfläche auf das Substrat das hergestellte erfindungsgemäße Schichtelement bei erhöhten Temperaturen, im allgemeinen im Bereich von 50 bis 200°C, vorzugsweise im Bereich von etwa 100 bis 150°C, zu tempern. Auch wenn dieser Temperschritt unmittelbar nach der Herstellung der erfindungsgemäßen Schichtelemente erfolgen soll, kann durchaus eine gewisse Lagerung zwischen der Herstellung der Schichtelemente und ihrer Temperung erfolgen, wenn die Lagerzeit nicht allzu lang ist und beispielsweise nicht mehr als einige Stunden beträgt. Lagerzeiten von einigen Tagen zwischen der Herstellung der Schichtelemente und der Temperung sind jedoch zu vermeiden. Der Tempervorgang als solcher kann je nach Art und Dicke der erfindungsgemäßen Schichtelemente beispielsweise zwischen einigen Minuten bis einigen Stunden dauern. Durch den an die Herstellung der erfindungsgemäßen Schichtelemente anschließenden Temperschritt können die Eigenschaften der erfindungsgemäßen Schichtelemente stabilisiert bzw. auch gezielt variiert werden.

Die erfindungsgemäßen Schichtelemente besitzen aufgrund ihrer vielfältigen und vorteilhaften Eigenschaften ein breites Anwendungsspektrum. Aufgrund der Absorptionseigenschaften und der optischen Anisotropie der festen, dünnen, geordneten Schichten von den metallomakrocyclischen Polymeren können erfindungsgemäße Schichtelemente mit transparenten Schichtträgern beispielsweise als optische Filter, Graufilter, Polarisationsfilter oder Interferenzfilter eingesetzt werden. Solche Filter aus den erfindungsgemäßen Schichtelementen sind dabei temperaturunabhängig bis 250°C verwendbar. Ihre Eigenschaften hängen von der Art des die feste, dünne, geordnete anisotrope Schicht bildenden metallomakrocyclischen Polymeren sowie der Dicke dieser Schicht ab. So nimmt beispielsweise die Extenktion der erfindungsgemäßen Schichtelemente mit transparentem Schichtträger linear mit der Dicke der festen, dünnen, geordneten Schichten von den metallomakrocyclischen Polymeren zu. Die Größe der optischen Anisotropie ist neben der Art der für die Herstellung der festen, dünnen, geordneten Schichten verwendeten metallomakrocyclischen Polymeren bzw. metallomakrocyclischen Polymer/Monomer-Mischungen selbstverständlich auch von der Wellenlänge des eingestrahlten Lichts abhängig. Beispielsweise wurde an erfindungsgemäßen Schichtelementen bei einer Wellenlänge von 570 nm eine optische Anisotropie, d.h. ein Verhältnis der Extinktionen von senkrecht und parallel zur Richtung der Molekülorientierung in den festen, dünnen, geordneten Schichten eingestrahltem Licht, im Bereich von 2 bis 6 gemessen.

Da die erfindungsgemäßen Schichtelemente wegen der polycyclischen Ringsysteme der metallomakrocyclischen Polymere im Sinne der Elektrochemie elektroaktiv sind, d.h. definierte Redox-Zustände ausbilden, lassen sich die erfindungsgemäßen Schichtelemente auch mit Vorteil in der Elektrochemie einsetzen. Beispielsweise können Elektroden, z.B. aus Platin, zur Erzeugung von Sensor- oder Katalysator-Effekten mit den festen, dünnen, geordneten Schichten von den metallomakrocyclischen Polymeren unter Erhalt von erfindungsgemäßen Schichtelementen beschichtet werden. Dadurch lassen sich beispielsweise Überspannungen am Platin abbauen oder auch gewisse Potentialbereiche für die Elektrode sperren. Wegen der definierten Redox-Zustände der metallomakrocyclischen Polymeren der in Rede stehenden Art weisen hiermit beschichtete Elektroden zwischen den einzelnen Redoxpotentialen des polycyclischen Ringsystems der metallomakrocyclischen Polymeren "Fenster" auf, in denen sie nicht aktiv sind. In den erfindungsgemäßen Schichtelementen besitzen die festen, dünnen, geordneten Schichten von den metallomakrocyclischen Polymeren im allgemeinen eine spezifische elektrische Leitfähigkeit in der Größenordnung von etwa $10^{-10}$ $Ohm^{-1}$ $cm^{-1}$. Werden als Schichtträger für die festen, dünnen, geordneten Schichten von den metallomakrocyclischen Polymeren der erfindungs gemäßen Schichtelemente Halbleiter-Bauteile eingesetzt, so eignen sich die festen, dünnen, geordneten Schichten von den metallomakrocyclischen Polymeren sehr gut als Isolationsschichten für diese Halbleiter-Bauteile. Andererseits läßt sich die elektrische Leitfähigkeit der festen, dünnen, geordneten Schichten von den metallomakrocyclischen Polymeren in den erfindungsgemäßen Schichtelementen durch partielle Oxidation, beispielsweise durch Behandlung mit lod-Dampf oder durch elektrochemische Oxidation, um einige Zehnerpotenzen in den halbleitenden Bereich, z.B. in die Größenordnung von etwa $10^{-7}$ bis $10^{-2}$ $Ohm^{-1}$ $cm^{1}$, anheben. Die festen, dünnen, geordneten Schichten von den metallomakrocyclischen Polymeren können damit auch zur antistatischen Ausrüstung von Gegenständen verwendet werden, wenn sie z.B. als Oberflächenfilm auf Kunststoffteile, wie Fenster, Schallplatten, elektronische Bauteile etc., als Schichtträger aufgebracht werden. Des weiteren können die erfindungsgemäßen Schichtelemente auch als lichtempfindliche Aufzeichnungselemente für die Elektrophotographie verwendet werden, wenn als Schichtträger ein elektrisch leitendes Substrat verwendet wird.

Die Erfindung wird durch die nachfolgenden Beispiele näher erläutert. Die in den Beispielen genannten Teile und Prozente beziehen sich, sofern nicht anders angegeben, auf das Gewicht.

<u>Beispiel 1</u>

a) Herstellung von Tetramethoxy-tetraoctoxy-phthalocyaninatopolysiloxan $[(CH_3O)_4(C_8H_{17}O)_4PcSiO]_n$

7,6 g $CH_3O$-$C_8H_{17}O$-1,3-diiminoisoindolinin wurden in 100 ml Chinolin unter Stickstoffatmosphäre auf 50°C erwärmt. Die Lösung wurde nach Zugabe von Siliciumtetrachlorid 30 Minuten auf 160°C erhitzt und nach dem Abkühlen in 200 ml einer Wasser/Methanol-Mischung (1:2) gegossen. Das so erhaltene Tetramethoxy-tetraoctoxy-phthalocyaninsiliziumdichlorid wurde abgesaugt und mit Methanol gewaschen, nochmals in Chloroform aufgelöst, die Lösung filtriert und das Filtrat schließlich eingedampft. Das Tetramethoxy-tetraoctoxy-phthalocyaninsiliziumdichlorid wurde zum Dihydroxid hydrolisiert und dieses dann anschließend zu dem gewünschten Phthalocyaninatopolysiloxan polykondensiert. Hierzu wurden 1 g des Tetramethoxy-tetraoctoxy-phthalocyaninsiliziumdihydroxids und 50 mg Eisen(III)-chlorid in Toluol unter Rühren 7 Tage unter Rückfluß gekocht. Zur Kontrolle des Umsatzes wurden Proben gezogen und in Toluol Absorptionsspektren aufgenommen. Nach Ende der Reaktion wurde das Toluol abgezogen, das Phthalocyaninatopolysiloxan mit Wasser und Methanol gewaschen und bei 50°C im Vakuum getrocknet.

b) Herstellung eines Schichtelements

100 ml einer Lösung des unter a) hergestellten Phthalocyaninatopolysiloxans in Chloroform (ca. 1,6 mg Phthalocyaninatopolysiloxan pro ml Chloroform) wurden auf einer etwa 60 $cm^2$ großen Wasseroberfläche zu einer Monoschicht ausgebreitet, die mittels einer Barriere bis auf einen Oberflächendruck von 20 mN/m komprimiert wurde. Dieser laterale Oberflächendruck wurde während des Übertragens der Monoschicht auf das Substrat konstant gehalten. Als Substrat für die Herstellung des Schichtelements diente ein Glasplättchen, dessen Oberfläche zuvor durch Behandlung mit Dimethylsiliziumdichlorid hydrophobisiert worden war. Das Substrat wurde senkrecht mit einer Geschwindigkeit von 8 mm/Minute in die mit der Monoschicht aus dem Phthalocyaninatopolysiloxan bedeckte Wasserphase eingetaucht und wieder herausgezogen. Durch mehrfache Wiederholung dieses Vorganges wurden auf jede Oberfläche des Substrats 40 Monoschichten des Phthalocyaninatopolysiloxans aufgebracht, so daß das Glaplättchen insgesamt mit 80 Monoschichten belegt war.

Von dem under b) hergestellten Schichtelement wurden die Absorptionsspektren im Wellenlängenbereich von 500 bis 800 nm mit polarisiertem Licht aufgenommen. Dabei stand einmal die Polachse senkrecht und einmal parallel zur Tauchrichtung des Glasplättchens und damit zur Ausrichtung der Phthalocyaninatopolysiloxan-Moleküle in den Schichten. Bei senkrecht eingestrahltem Licht wurde über den gesamten Wellenlängenbereich eine deutlich höhere Absorption gemessen als bei dem polarisierten Licht, dessen Polarisationsebene parallel zur Tauchrichtung stand. Im Absorptionsmaximum bei 560 nm

betrug die optische Anisotropie (Verhältnis der um die Eigenabsorption des Glases verminderten Extinktionen des Schichtelements bei senkrechter und paralleler Einstrahlung des Lichts) 2,57.

Beispiel 2

Wie in Beispiel 1 b) beschrieben, wurden auf einem Glasträger mit hydrophobisierter Oberfläche Multischichten hergestellt. Diesmal wurden jedoch zur Herstellung der Multischichten Mischungen aus dem Tetramethoxy-tetraoctoxy-phthalocyaninatopolysiloxan und dem monomeren Tetramethoxy-tetraoctoxyphthalocyaninsiliziumdihydroxid in verschiedenen Mischungsverhältnissen eingesetzt. Es wurden die Absorptionsspektra der verschiedenen Schichtelemente mit polarisiertem Licht im Wellenlängenbereich von 500 bis 800 nm für die Fälle aufgenommen, daß die Polachse senkrecht bzw. parallel zur Tauchrichtung des Glasträgers stand. Das Absorptionsmaximum der Schichtelemente war diesmal in den Bereich von etwa 690 bis 700 nm, d.h. zum Absorptionsmaximum des monomeren Phthalocyaninsiliziumdihydroxids hin, verlagert worden. Die Schichtelemente zeigten über den gesamten Wellenlängenbereich hinweg eine deutlich ausgeprägte Anisotropie. Die optische Anisotropie bei 570 nm und 690 nm in Abhängigkeit von dem Polymer/Monomer-Mischungsverhältnis ist in der nachfolgenden Tabelle wiedergegeben. Bei den Anisotropiewerten handelt es sich um das Verhältnis der um die Eigenabsorption des hydrophobisierten Glasträgers korrigierten optischen Dichten der Schichtelemente bei Einstrahlung des polarisierten Lichts senkrecht bzw. parallel zur Tauchrichtung des Glasträgers.

Tabelle

| Anteil des Polymeren in der Mischung | Optische Anisotropie bei 570 nm | bei 690 nm |
|---|---|---|
| 100% | 2,4 | 2,1 |
| 66% | 2,8 | 2,0 |
| 45% | 2,5 | 1,6 |
| 34% | 1,7 | 1,5 |

Vergleichsversuch

Es wurde wie in Beispiel 2 beschrieben gearbeitet, diesmal jedoch wurden die Multischichten auf dem Glasträger allein unter Verwendung des monomeren Tetramethoxy-tetraoctoxy-phthalocyaninsiliziumdihydroxids, d.h. ohne Mitverwendung eines Polymeren, hergestellt. Man konnte zware geordnete Schichten von der Wasserphase auf den Glasträger übertragen, das erhaltene Schichtelement war jedoch optisch isotrop.

Beispiel 3

Es wurde wie in Beispiel 1 gearbeitet, diesmal jedoch ein Schichtelement hergestellt, das auf dem Glasträger Multischichten aus ingesamt 120 Monoschichten aufgebracht enthielt. Das Schichtelement wurde unmittelbar nach seiner Herstellung auf 140°C erhitzt und bei dieser Temperatur ca. 1 Stunde getempert. Durch diese Temperung erhöhte sich die optische Anisotropie des Schichtelementes (bei 570 nm) von 2,48 auf 5,82.

Beispiel 4

Analog wie in Beispiel 1 a) beschrieben, wurde ein Tetramethoxy-tetradodecoxy-phthalocyaninatopolysiloxan $[(CH_3O)_4(C_{12}H_{25}O)_4PcSiO]_n$ synthetisiert und damit auf hydrophobisiertem Quarz als Schichtträger aus insge samt 40 Monoschichten bestehende Multischichten aufgebracht. Die Phthalocyaninatopolysiloxan-Schichten hatten eine elektrische Leitfähigkeit von etwa $10^{-10}$ Ohm $^{-1}$ cm$^{-1}$. Danach wurden die Multischichten des Schichtelements chemisch durch Behandlung mit Iod in Chloroform oxidiert und anschließend überschüssiges Iod mit chloroform azeotrop abdestilliert. Die so behandelten Schichten wiesen eine elektrische Leitfähigkeit im Bereich von etwa $10^{-4}$ bis $10^{-5}$ Ohm$^{-1}$ cm$^{-1}$ auf.

Beispiel 5

Es wurde wie in Beispiel 1 gearbeitet, diesmal jedoch anstelle des Glasplättchens als Schichtträger ein Platinblech eingesetzt, auf das eine Multischicht aus ingesamt 40 Monoschichten aufgebracht wurde. Mit diesem Schichtelement als Elektrode wurde ein Cyclovoltammogram in Acetonitril als Elektrolytlösungsmittel aufgenommen. Die Elektrode zeigte definierte Reduktions- und Oxidationspotentiale. Das erste Reduktionspotential lag bei -1,5 V (gegen Ag/AgCl); das erste Oxidationspotential bei 00,7 V. Wegen der definierten Oxidations- und Reduktionspotentiale der Multischichten aus dem Phthalocyaninatopolysiloxan floß bei einer Spannung im Bereich von 0 V bis -1 V kein Strom, so daß das Platin durch die aufgebrachte Multischicht aus dem Phthalocyaninatopolysiloxan in diesem Potentialfenster passiviert worden ist.

## Patentansprüche für die Vertragsstaaten: AT, BE, CH, LI, DE, FR, GB, IT, NL, SE

1. Schichtelement mit einem Schichtträger mit hydrophober Oberfläche und mindestens einer hierauf aufgebrachten festen, dünnen, geordneten Schicht definierter einheitlicher und regelmäßiger Struktur mit gleichförmiger Molekülorientierung in einer Richtung von einem in einem organischen, mit Wasser nicht mischbaren Lösungsmittel löslichen und/oder schmelzbaren metallomakrocyclischen Polymeren der allgemeinen Formel $[M(Pcyc)O]_n$, worin bedeuten
M = Si, Ge oder Sn,
Pcyc = ein komplexbildendes zentrosymmetrisches polycyclisches Ringsystem und
n = mittlerer Polymerisationsgrad gleich oder größer 3.

2. Schichtelement nach Anspruch 1, dadurch gekennzeichnet, daß das metallomakrocyclische Polymere ein Phthalocyaninatopolymetalloxan der allgemeinen Formel $[M(Pc)O]_n$ ist, worin stehen M für Si, Ge oder Sn, Pc für ein hydrophob substituiertes Phthalocyanin-Rinsystem und n für den mittleren Polymerisationsgrad gleich oder größer 3.

3. Schichtelement nach einem der Ansprüche 1 oder 2, dadurch gekennzeichnet, daß die feste, dünne, geordnete Schicht bzw. die festen, dünnen, goerdneten Schichten eine Mischung von den metallomakrocyclischen Polymeren und monomeren metallomakrocyclischen Verbindungen der allgemeinen Formel $[M(Pcyc)X_2]$ enthalten, wobei M = Si, Ge oder Sn, Pcyc = ein komplexbildendes zentrosymmetrisches polycyclisches Ringsystem und X eine an M gebundene Endgruppe, insbesondere eine Hydroxyl-Gruppe, bedeuten.

4. Schichtelement nach einem der Ansprüchen 2 oder 3, dadurch gekennzeichnet, daß in der festen, dünnen, geordneten Schicht von den Phthalocyaninatopolymetalloxanen in Mischung hiermit auch hydrophob substituierte monomere Phthalocyaninatometalloxane des Siliziums, Germaniums oder Zinns enthalten sind.

5. Schichtelement nach einem der Ansprüche 1 bis 4, dadurch gekennzeichnet, daß die festen, dünnen, geordneten Schichten von den metallomakrocyclischen Polymeren eine Monomolekularschichtstruktur oder Multimolekularschichtstruktur aufweisen.

6. Schichtelement nach einem der Ansprüche 1 bis 5, dadurch gekennzeichnet, daß die Moleküle der metallomakrocyclischen Polymeren in den festen, dünnen, geordneten Schichten so orientiert sind, daß die Polymerketten parallel zueinander und in der Schichtebene liegen.

7. Schichtelement nach einem der Ansprüche 1 bis 6, dadurch gekennzeichnet, daß die festen, dünnen, geordneten Schichten von den metallomakrocyclischen Polymeren unmittelbar nach ihrer Herstellung bei einer Temperatur im Bereich von 50 bis 200°C, insbesondere von 100 bis 150°C, getempert worden sind.

8. Verfahren zur Herstellung eines Schichtelements gemäß einem der Ansprüche 1 bis 7 durch Aufbringen mindestens einer festen, dünnen, geordneten Schicht definierter Struktur auf ein Substrat als Schichtträger, dadurch gekennzeichnet, daß man eine auf einer Wasseroberfläche erzeugte monomolekulare festanaloge Schicht von einem in einem organischen, mit Wasser nicht mischbaren Lösungsmittel löslichen metallomakrocyclischen Polymeren der allgemeinen Formel $[M(Pcyc)O]_n$, worin M = Si, Ge oder Sn, Pcyc = ein komplexbildendes zentrosymmetrisches polycyclisches Ringsystem und n = den mittleren Polymerisationsgrad gleich oder größer 3 bedeuten, in an sich bekannter Weise von der Wasseroberfläche durch Ein- bzw. Austauchen eines Substrats mit hydrophober Oberfläche hierauf überträgt sowie gegebenenfalls diesen Vorgang mehrfach wiederholt.

9. Verfahren nach Anspruch 8, dadurch gekennzeichnet, daß man zur Herstellung der Schichtelemente Phthalocyaninatopolymetalloxane der allgemeinen Formel $[M(Pc)O]_n$, worin M = Si, Ge oder Sn, (Pc) = ein hydrophob substituiertes Phthalocyanin-Ringsystem und n = den mittleren Polymeriationsgrad gleich oder größer 3 bedeuten, oder Mischungen hiervon mit den diesen Phthalocyaninatopolymetalloxanen zugrundeliegenden monomeren Phthalocyaninatometalloxanen einsetzt.

10 Verwendung von Schichtelementen nach einem der Ansprüche 1 bis 7, die einen transparenten Schichtträger enthalten, als optische Filter.

11. Verwendung von Schichtelementen gemäß einem der Ansprüche 1 bis 7 in der Elektrochemie oder der Elektrotechnik.

12. Verwendung eines Schichtelements gemäß einem der Ansprüche 1 bis 7 mit einem elektrisch leitfähigen Schichtträger als lichtempfindliches Aufzeichnungsmaterial in der Elektrophotographie.

## Patentansprüche für den Vertragsstaat: ES

1. Verfahren zur Herstellung eines Schichtelements mit mindestens einer auf ein Substrat als Schichtträger aufgebrachten festen, dünnen geordneten Schicht definierter Struktur, dadurch gekennzeichnet, daß man auf einer Wasseroberfläche eine monomolekulare festanaloge Schicht von einem in

einem organischen, mit Wasser nicht mischbaren Lösungsmittel löslichen metallomakrocyclischen Polymeren der allgemeinen Formel $[M(Pcyc)O]_n$, worin M = Si, Ge oder Sn, Pcyc = ein komplexbildendes zentrosymmetrisches polycyclisches Ringsystem und n = den mittleren Polymerisationsgrad gleich oder größer 3 bedeuten, erzeugt und diese monomolekulare Schicht von der Wasseroberfläche durch Ein- bzw. Austauchen eines Substrats mit hydrophober Oberfläche hierauf überträgt sowie gegebenenfalls diesen Vorgang mehrfach wiederholt.

2. Verfahren nach Anspruch 1, dadurch gekennzeichnet, daß eine monomolekulare, festanaloge Schicht aus einer Mischung von den metallomakrocyclischen Polymeren und monomeren metallomakrocyclischen Verbindungen der allgemeinen Formel $[M(Pcyc)X_2]$, wobei M = Si, Ge oder Sn, Pcyc = ein komplexbildendes zentrosymmetrisches polycyclisches Ringsystem und X eine an M gebundene Endgruppe, insbesondere eine Hydroxyl-Gruppe, bedeuten, auf der Wasseroberfläche erzeugt und auf das Substrat übertragen wird.

3. Verfahren nach Anspruch 1, dadurch gekennzeichnet, daß man zur Herstellung der Schichtelemente Phthalocyaninatopolymetalloxane der allgemeinen Formel $[M(Pc)O]_n$, worin M = Si, Ge oder Sn, (Pc) = ein hydrophob substituiertes Phthalocyanin-Ringsystem und n = den mittleren Polymerisationsgrad gleich oder größer 3 bedeuten, oder Mischungen hiervon mit den diesen Phthalocyaninatopolymetalloxanen zugrundeliegenden monomeren Phthalocyaninatometalloxanen einsetzt.

4. Verfahren nach einem der Ansprüche 1 bis 3, dadurch gekennzeichnet, daß die Schichtelemente unmittelbar nach ihrer Herstellung bei einer Temperatur im Bereich von 50 bis 200°C, insbesondere von 100 bis 150°C, getempert werden.

5. Verwendung von nach einem der Ansprüche 1 bis 4 hergestellten Schichtelementen, die einen transparenten Schichtträger enthalten, als optische Filter.

6. Verwendung von nach einem der Ansprüche 1 bis 4 hergestellten Schichtelementen in der Elektrochemie oder der Elektrotechnik.

7. Verwendung eines nach einem der Ansprüche 1 bis 4 hergestellten Schichtelements mit einem elektrisch leitfähigen Schichtträger als lichtempfindliches Aufzeichnungsmaterial in der Elektrophotographie.

**Revendications pour l'état contractant: ES**

1. Procédé de fabrication d'un élément en forme de couche avec au moins une couche solide, mince, ordonnée, de structure définie, sur un substrat servant de support de couche, caractérisé en ce que l'on réalise, sur une surface d'eau, une couche monomoléculaire, de nature quasi solide, d'un polymère métallo-macrocyclique, organique, soluble dans des solvants non miscibles à l'eau, de la formule générale $[M(Pcyc)O]_n$ dans laquelle M représente Si, Ge ou Sn, Pcyc représente un système cyclique, polycyclique, centrosymétrique, formateur de complexes et n désigne un degré de polymérisation moyen égal ou supérieur à 3, et on procède au transfert de cette couche monomoléculaire de la surface d'eau par plongée et retrait d'un substrat à surface hydrophobe sur ce dernier, et de multiples répétitions éventuelles de ce processus.

2. Procédé suivant la revendication 1, caractérisé en ce que l'on réalise une couche monomoléculaire, de nature quasi solide, d'un mélange des polymères métallo-macrocycliques et de composés métallo-macrocycliques monomères de la formule générale $[M(Pcyc)X_2]$ dans laquelle M représente Si, Ge ou Sn, Pcyc représente un système cyclique, polycyclique, centrosymétrique, formateur de complexes, et X représente un radical terminal, plus particulièrement un radical hydroxyle, lié à M, sur la surface d'eau, et on procède à son transfert sur le substrat.

3. Procédé suivant la revendication 1, caractérisé en ce qu'en vue de la préparation des éléments en forme de couche, on utilise des phtalocyaninatopolymétalloxannes de la formule générale $[M(Pc)O]_n$ dans laquelle M représente Si, Ge ou Sn, (Pc) représente un système cyclique phtalocyaninique à substitution hydrophobe et n représente un degré de polymérisation moyen égal ou supérieur à 3, ou des mélanges de ceux-ci et de phtalocyaninatopolymétalloxannes monomères qui sont à la base de ces phtalocyaninatopolymétalloxannes.

4. Procédé suivant l'une des revendications 1 à 3, caractérisé en ce que les éléments en forme de couche sont traités, immédiatement après leur préparation, à une température qui se situe dans la plage de 50 à 200°C, plus particulièrement de 100 à 150°C.

5. Utilisation d'un des éléments en forme de couche fabriqués par mise en œuvre de l'une des revendications 1 à 4, qui contiennent un support de couche transparent, à titre de filtres optiques.

6. Utilisation des éléments en forme de couche fabriqués par mise en œuvre de l'une des revendications 1 à 4, dans le domaine de l'électrochimie ou de l'électrotechnique.

7. Utilisation d'un élément en forme de couche fabriqué selon l'une des revendications 1 à 4, avec un support de couche conducteur de l'électricité, à titre de matériau d'enregistrement sensible à la lumière dans le domaine de l'électrophotographie.

**Claims for the Contracting State: ES**

1. A process for the production of a layer element which possesses one or more solid, thin, ordered layers of defined structure applied on a substrate as a base, wherein a monomolecular solid-like layer consisting of a metallomacrocyclic polymer which is soluble in an organic water-immiscible solvent and is of the formula $[M(Pcyc)O]_n$, where M is Si, Ge or Sn, Pcyc is a complex-forming centrosymmetric polycyclic ringsystem and n is the mean degree of polymerization and is equal to or greater than 3, is produced on a water surface and the said monomolecular layer is transferred from the water surface to a substrate having a hydrophobic surface by immersion and withdrawal of the said substrate, and, if required, this operation is repeated several times.

2. A process claimed in claim 1, wherein a monocular solid-like layer consisting of a mixture of the metallomacrocyclic polymers and monomeric metallomacrocyclic compounds of the formula $[M(Pcyc)X_2]$, where M is Si, Ge or Sn, Pcyc is a complex-forming centrosymmetric polycyclic ring system and X is a terminal group bonded to M, in particular a hydroxyl group, is produced on the water surface and transferred to the substrate.

3. A process as claimed in claim 1, wherein phthalocyaninatopolymetalloxanes of the formula $[M(Pc)O]_n$, where M is Si, Ge or Sn, (Pc) is a phthalocyanine ring system having hydrophobic substituents and n is the mean degree of polymerization and is equal to or greater than 3, or mixtures of these with the monomeric phthalocyaninatometalloxanes from which these phthalocyaninatopolymetalloxanes are derived are used to produce the layer element.

4. A process as claimed in any of claims 1 to 3, wherein the layer elements are heated at from 50 to 200°C, in particular from 100 to 150°C, immediately after their production.

5. Use of a layer element produced as claimed in any of claims 1 to 4, which contains a transparent base, as an optical filter.

6. Use of a layer element produced as claimed in any of claims 1 to 4 in electrochemistry or the electrical industry.

7. Use of a layer element produced as claimed in any of claims 1 to 4 with an electrically conductive base as a photosensitive recording material in electrophotography.

**Revendications pour les états contractants: AT, BE, CH, LI, DE, FR, GB, IT, NL, SE**

1. Elément en forme de couche avec un support de couche, à surface hydrophobe et au moins, appliquée ou déposée sur ce support, une couche solide, mince, ordonnée, de structure régulière et homogène, avec orientation moléculaire uniforme dans une direction, d'un polymère organique, métallo-macrocyclique, fusible et/ou soluble dans des solvants non miscibles à l'eau, de la formule générale $[M(Pcyc)O]_n$ dans laquelle
M représente Si, Ge ou Sn,
Pcyc représente un système cyclique polycyclique, centrosymétrique, formateur de complexes, et
n désigne un degré de polymérisation moyen égal ou supérieur à 3.

2. Elément en forme de couche selon la revendication 1, caractérisé en ce que le polymère métallo-macrocyclique est un phtalocyaninatopolymétalloxanne de la formule générale $[M(Pc)O]_n$ dans laquelle M représente Si, Ge ou Sn, Pc représente un système cyclique phtalocyaninique à substitution hydrophobe et n représente un degré de polymérisation moyen égal ou supérieur à 3.

3. Elément en forme de couche suivant l'une des revendications 1 ou 2, caractérisé en ce que la couche solide, mince, ordonnée ou les couches solides, minces, ordonnées, contiennent un mélange des polymères métallo-macrocycliques et de composés métallo-macrocycliques monomères de la formule générale $[M(Pcyc)X_2]$ dans laquelle M représente Si, Ge ou Sn, Pcyc représente un système cyclique polycyclique centrosymétrique formateur de complexes et X représente un radical terminal, plus particulièrement un radical hydroxyle, lié à M.

4. Elément en forme de couche suivant l'une des revendications 2 ou 3, caractérisé en ce que la couche solide, mince, ordonnée, des phtalocyaninatopolymétalloxannes contient également, en mélange à ceux-ci, des phtalocyaninatométalloxannes monomères, à substitution hydrophobe, du silicium, du germanium ou de l'étain.

5. Elément en forme de couche suivant l'une des revendications 1 à 4, caractérisé en ce que les couches solides, minces, ordonnées, des polymères métallo-macrocycliques, présentent une structure à couche monomoléculaire ou une structure à couche multimoléculaire.

6. Elément en forme de couche suivant l'une des revendications 1 à 5, caractérisé en ce que les molécules des polymères métallo-macrocycliques dans les couches solides, minces, ordonnées, sont ainsi orientées que les chaînes polymères s'étendent parallèlement les unes aux autres et dans le plan de la couche.

7. Elément en forme de couche suivant l'une des revendications 1 à 6, caractérisé en ce que les couches solides, minces, ordonnées, des polymères métallo-macrocycliques ont été traitées, immédiatement après leur préparation, à une température qui varie de 50 à 200°C, plus particulièrement de 100 à 150°C.

8. Procédé de préparation d'un élément en forme de couche selon l'une des revendications 1 à 7, par application ou dépôt d'au moins une couche solide, mince, ordonnée, de structure définie, sur un substrat servant de support de couche, caractérisé en ce que l'on procède au transfert, sur le substrat d'une couche monomoléculaire, de nature quasi solide, obtenue sur une surface d'eau, d'un polymère métallo-macrocyclique soluble dans des solvants non miscibles à l'eau, organique, de la formule générale $[M(Pcyc)O]_n$ dans laquelle M représente Si, Ge ou Sn, Pcyc représente un système cyclique, polycyclique, centrosymétrique, formateur de complexes et n représente un degré de polymérisation moyen égal ou supérieur à 3, de manière connue, depuis la surface de l'eau, par plongée et sortie d'un substrat à surface hydrophobe et multiples répétitions éventuelles de ce processus.

9. Procédé suivant la revendication 8, caractérisé en ce qu'en vue de la préparation des éléments en forme de couche, on utilise des phtalocyaninatopolymétalloxannes de la formule générale $[M(Pc)O]_n$ dans laquelle M représente le silicium, le germanium ou l'étain, (Pc) représente un système cyclique phtalocyaninique à substitution hydrophobe et n désigne un degré de polymérisation moyen égal ou supérieur à 3, ou des mélanges de ceux-ci et de phtalocyaninatopolymétalloxannes monomères qui sont à la base de ces phtalocyaninatopolymétalloxannes.

10. Utilisation d'éléments en forme de couche suivant l'une des revendications 1 à 7, qui contiennent un support de couche transparent à titre de filtres optiques.

11. Utilisation d'éléments en forme de couche selon les revendications 1 à 7, dans le domaine de l'électrochimie ou de l'électrotechnique.

12. Utilisation d'un élément en forme de couche selon l'une des revendications 1 à 7, avec un support de couche conducteur de l'électricité, à titre de matériau d'enregistrement sensible à la lumière dans le domaine de l'électrophotographie.

## Claims for the contracting states: AT, BE, CH, LI, DE, FR, GB, IT, NL, SE

1. A layer element which possesses a base having a hydrophobic surface and, applied on the said base, one or more solid, thin, ordered layers having a defined uniform and regular structure with uniform orientation of the molecules in one direction and consisting of a metallomacrocyclic polymer which is fusible and/or soluble in an organic water-immiscible solvent and is of the formula $[M(Pcyc)O]_n$, where M is Si, Ge or Sn, Pcyc is a complex-forming centrosymmetric polycyclic ring system and n is the mean degree of polymerization and is equal to or greater than 3.

2. A layer element as claimed in claim 1, wherein the metallomacrocyclic polymer is a phthalocyaninatopolymetalloxane of the formula $[M(Pc)O]_n$, where M is Si, Ge or Sn, Pc is a phthalocyanine ring system having a hydrophobic substituent and n is the mean degree of polymerization and is equal to or greater than 3.

3. A layer element as claimed in claims 1 or 2, wherein the solid, thin, ordered layer or layers contains or contain a mixture of the metallomacrocyclic polymers and monomeric metallomacrocyclic compounds of the formula $[M(Pcyc)X_2]$, where M is Si, Ge or Sn, Pcyc is a complex-forming centrosymmetric polycyclic ring system and X is a terminal group bonded to M, in particular a hydroxyl group.

4. A layer element as claimed in claims 2 or 3, wherein the solid, thin, ordered layer of the phthalocyaninatopolymetalloxanes also contains, mixed with these compounds, monomeric silicon, germanium or tin phthalocyaninatometalloxanes possessing hydrophobic substituents.

5. A layer element as claimed in any of claims 1 to 4, wherein the solid, thin, ordered layers of the metallomacrocyclic polymers have a monolayer or multilayer structure.

6. A layer element as claimed in any of claims 1 to 5, wherein the molecules of the metallomacrocyclic polymers in the solid, thin, ordered layers are oriented so that the polymer chains are parallel to one another and are in the plane of the layer.

7. A layer element as claimed in any of claims 1 to 6, wherein the solid, thin, ordered layers of the metallomacrocyclic polymers have been heated at from 50 to 200°C, in particular from 100 to 150°C, immediately after their production.

8. A process for the production of a layer element as claimed in any of claims 1 to 7 by applying one or more solid, thin, ordered layers of defined structure onto a substrate as a base, wherein a monomolecular solid-like layer produced on a water surface and consisting of a metallomacrocyclic polymer which is soluble in an organic water-immiscible solvent and is of the formula $[M(Pcyc)O]_n$, where M is Si, Ge or Sn, Pcyc is a complex-forming centrosymmetric polycyclic ring system and n is the mean degree of polymerization and is equal to or greater than 3, is transferred in a conventional manner from the water surface to a substrate having a hydrophobic surface by immersion and withdrawal of the said substrate, and, if required, this operation is repeated several times.

9. A process as claimed in claim 8, wherein phthalocyaninatopolymetalloxanes of the formula $[M(Pc)O]_n$, where M is Si, Ge or Sn, (Pc) is a phthalocyanine ring system having hydrophobic substituents and n is the mean degree of polymerization and is equal to or greater than 3, or mixtures of these with the monomeric phthalocyaninatometalloxanes from which these phthalocyaninatopolymetalloxanes are derived are used to produce the layer element.

10. Use of a layer element as claimed in any of claims 1 to 7, which contains a transparent base, as an optical filter.

11. Use of a layer element as claimed in any of claims 1 to 7 in electrochemistry or the electrical industry.

12. Use of a layer element as claimed in any of claims 1 to 7 with an electrically conductive base as a photosensitive recording material in electrophotography.